# EUROPÄISCHE PATENTSCHRIFT

(11) **EP 0 826 999 B1**
(45) Veröffentlichungstag und Bekanntmachung des Hinweises auf die Patenterteilung: **23.11.2005**
(21) Anmeldenummer: 97113317.8
(22) Anmeldetag: 01.08.1997
(51) Int. Cl.: G02B 6/44

(54) **Abschlusselement für ein Zentralelement eines optischen Kabels und Verfahren zur Erstellung einer dichten Kabeleinführung**
Termination for a central element of an optical cable and method for making a sealed cable feedthrough
Terminaison pour élément central d'un câble optique et méthode de constitution d'une traversée étanche pour câbles

(30) Priorität: 28.08.1996 DE 19634847
(43) Veröffentlichungstag der Anmeldung: 04.03.1998
(73) Patentinhaber: CCS Technology, Inc., Wilmington, DE 19803 (US)
(72) Erfinder: Zimmer, Rainer, Dipl.-Ing., 58579 Schalksmühle (DE); Müller, Thorsten, Dipl.-Ing., 58708 Menden (DE)
(74) Vertreter: Sturm, Christoph

(56) Entgegenhaltungen:
- EP-A- 0 430 533
- EP-A- 0 693 699
- DE-A- 4 304 546
- US-A- 5 119 457

## Beschreibung

Abschlußelement für ein Zentralelement eines optischen Kabels und Verfahren zur Erstellung einer dichten Kabeleinführung.

Die Erfindung betrifft ein Abschlußelement für ein Zentralelement eines optischen Kabels und Verfahren zur Erstellung einer dichten Kabeleinführung.

Aus der DE 37 26 718-A1 ist eine Vorrichtung zum Anbringen einer mechanischen Verbindung am Kabelmantel eines optischen Kabels bekannt. Dort wird eine Klemmvorrichtung verwendet, die innerhalb einer Muffe im Spleißraum angeordnet wird. Das Zentralelement wird mit Hilfe einer Klemmvorrichtung abgefangen.

Aus der EP-A-0 693 699 ist eine Abfangvorrichtung für ein optisches Kabel bekannt, bei welchem ein Zentralelement des optischen Kabels von einem mit einer Klemmhülse zusammenwirkenden Klemmelement fixiert wird. Gemäß diesem Stand der Technik wird das Zentralelement in das aus der beidseitig offenen Klemmhülse herausgezogene Klemmelement eingelegt und anschließend die Klemmhülse über das Klemmelement geschoben. Hierbei wird das Zentralelement des optischen Kabels fixiert. Ein gegenüberliegendes Ende des Klemmelements wirkt mit einem Haltelement zusammen, welches in eine U-förmige Führung des Klemmelements eingeschoben wird.

Weiterer Stand der Technik ist aus der DE-A-43 04 546 sowie aus der EP-A- 0 430 533 bekannt.

Für vorliegende Erfindung stellt sich die Aufgabe, ein Abschlußelement für das Zentralelement eines optischen Kabels zu schaffen, das direkt im Einführungsbereich der Kabelmuffe angeordnet werden kann, wobei das Herauswandern des Zentralelementes verhindert und eine Kontaktierung des Kabelschirmes wie auch des Zentralelementes ermöglicht werden sollen. Diese gestellte Aufgabe wird mit einem Abschlußelement der eingangs beschriebenen Art dadurch gelöst, daß eine einseitig geschlossene Hülse zur Aufnahme des Endes des Zentralelementes vorgesehen ist, daß am offenen Ende der Hülse flexible Fahnen mit Ansatzenden angeordnet sind, daß die Fahnen der Form des Kabelmantels anpaßbare Auflagebereiche aufweisen, wobei ein Auflagebereich zu einer U-förmigen Aufnahme für einen längs aus dem Kabelmantel ausgeschnittenen Kabelmantellappen ausgebogen ist, daß in der Hülse als Halteelemente federnde Fahnen zur Fixierung und Kontaktierung des Zentralelementes angeordnet sind und daß ein Klemmelement die Auflagebereiche auf den Kabelmantel aufklemnmt.

Ferner ist Aufgabe der Erfindung, ein Verfahren zur Erstellung einer Kabeleinführung mit Hilfe eines Abschlußelementes der genannten Art zu finden. Diese Aufgabe wird mit dem Verfahren nach Anspruch 11 gelöst.

Die Vorteile bei der Ausbildung des Abschlußelementes gemäß der Erfindung sind darin zu sehen, daß mit ihm eine äußerst schnelle und problemlose Montage möglich ist, da es im wesentlichen nur aus einem Bauteil besteht, bei dem nur noch ein Fixierelement eingesetzt werden muß. Weiterhin sind alle zur Kontaktierung des Zentralelementes und des Kabelschirmes eines optischen Kabels benötigten Komponenten in diesem einzigen Bauteil zusammengefaßt. Durch den Einsatz von Federnmaterial bei den Halteelementen ist eine Anpassung an verschiedene Durchmesser jeweils möglich. Mit Hilfe von flexiblen Kontaktfedern ist die Kontaktierung problemlos zu gestalten. Die Halteelemente in Form von Fahnen können zum Beispiel durch einwärts gerichtete und aus der Hülse, die zum Fassen des Zentralelementes dient, ausgestanzte Ausschnitte gebildet werden, die auf das eingeführte Zentralelement aufgespreizt werden und dieses auf solche Weise fixieren. Durch die schmale Bauweise des Abschlußelementes können die Lichtwellenleiter-Adern des optischen Kabels ohne Behinderung herausgeführt werden. Die Gestaltung der Fixierelemente gewährt einfache Möglichkeiten zur Fixierung im Kabeleinführungsbereich der Kabelgarnituren, wobei die Verwendung eines Schrumpfschlauchstückes als überdeckende Dichtung sehr hilfreich ist. Durch diese Bauweise ist es weiter möglich, daß das Abschlußelement bereits im direkten Einführungsbreich untergebracht werden kann, so daß im Spleißraum kein Platz zur Verfügung gestellt werden muß.

Die Erfindung wird nun anhand von vier Figuren näher erläutert.
- Figur 1: zeigt eine schematische Seitenansicht des Abschlußelementes.
- Figur 2: zeigt eine Frontansicht.
- Figur 3: zeigt das am Kabel montierte Abschlußelement.
- Figur 4: zeigt einen Querschnitt durch einen Einführungsbereich einer Kabelgarnitur.

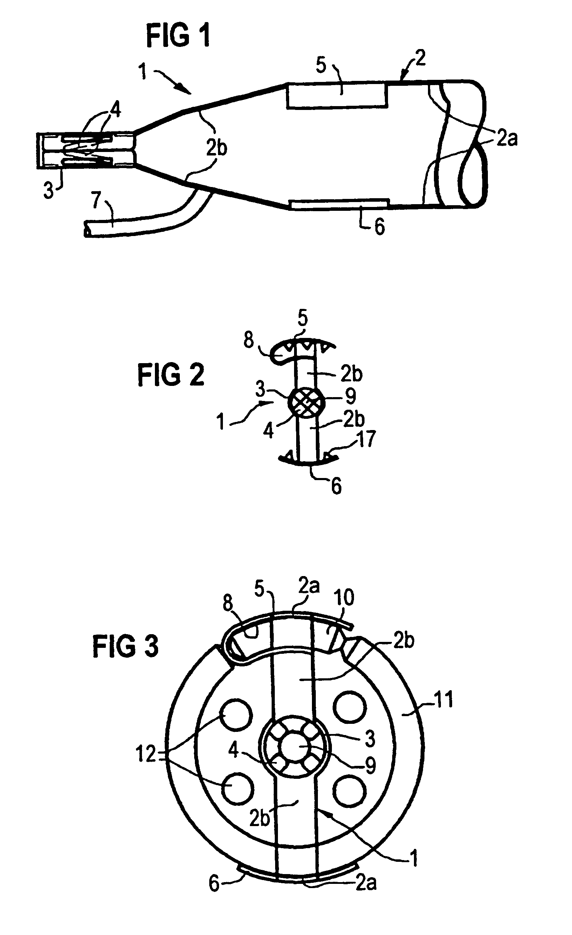

In Figur 1 ist das Abschlußelement 1 in einer Seitenansicht dargestellt, woraus hervorgeht, daß es aus einer zylindrischen, einseitig geschlossenen Hülse 3 besteht, an deren offener Seite zwei langgestreckte Fahnen 2 angesetzt sind. Diese Fahnen 2 sind an ihren Ansatzenden 2b konisch sich erweiternd nach auswärts gebogen und können durch Aufbiegen dem jeweiligen Kabeldurchmesser angepaßt werden, so daß die Weite in den Auflagebereichen 5 und 6 dem Kabeldurchmesser entspricht. Diese Aufnahmebereiche 5 und 6 sind mit ihren Auflageflächen der Form des Kabelmantels angeformt. Fixiert wird dann das Abschlußelement 1 mit Hilfe eines Klemmelementes, das die Aufnahmebereiche 5 und 6 umfaßt und auf den Kabelmantel preßt. Dieses Klemmelement ist hier nicht gezeigt. Der Aufnahmebereich 5 ist jedoch zusätzlich mit einer U-förmigen Aufnahme ausgeformt, in die ein Kabelmantellappen eingeführt wird. Die freien Fahnenenden 2a der Fahnen 2 können nach auswärts auf der Oberfläche der Kabeleinführung zurückgebogen werden, so daß dadurch eine Zentrierung und Vorfixierung in der Kabeleinführung vorgenommen werden kann. In der Hülse 3 wird das Zentralelement eines optischen Kabels bis zum Anschlag am geschlossenen Ende eingeführt und durch federnde Halteelemente, die auf den Umfang des Zentralelementes einwirken, fixiert, so daß ein Herauswandern des Zentralelementes, wie es zum Beispiel bei Temperaturschwankungen erfolgen könnte, verhindert wird. Außerdem ist angedeutet, daß ein Anschluß 7 für eine Erdkontaktierung vorgesehen ist.

Die Frontansicht des Abschlußelementes 1 in Figur 2 macht besonders die Ausführung der U-förmigen Aufnahme 8 des Auflagebereiches 5 deutlich. In die Aufnahme 8 wird zur Fixierung des Kabels ein durch zwei parallele, längsgerichtete Einschnitte in den Kabelmantel des Kabels gebildeter Kabelmantellappen eingeführt. Nach innen gerichtete Kontaktdurchrisse 17 erhöhen die Griffigkeit und ergeben gleichzeitig eine Kontaktierung des Kabelschirmes. Der untere Aufnahmebereich 6 weist ebenfalls Kontaktdurchrisse 7 auf und ist zur Anpassung an den Kabelmantel kreisförmig gebogen. In der Mitte ist die Hülse 3 erkennbar, in der nach einwärts gerichtete federnde Halteelemente angeordnet sind. Hier handelt es sich dabei um vier flexible Fahnen 4, die nach einwärts so ausgestellt sind, daß das Herauswandern des Zentralelementes verhindert wird. Durch die Flexibilität dieser Fahnen 4 erfolgt die Anpassung an die verschiedenen Durchmesser der Zentralelemente 9. Von der Hülse 3 ausgehend sind die beiden Ansatzenden 2b der Fahnen 2 erkennbar.

Figur 3 zeigt das Abschlußelement 1 im montierten Zustand. Daraus ist ersichtlich, daß ein Kabelmantellappen 10 in der U-förmigen Aufnahme 8, die aus dem Auflagebereich 5 der Fahne 2 ausgeformt ist, eingeführt ist und daß die Formen der Auflagebereiche 5 und 6 dem Kabelmantel 11 angeglichen sind. Im Inneren des Kabels sind Lichtwellenleiter 12 angedeutet und das Zentralelement 9 des Kabels wird im Inneren der Hülse 3 mit den als Halteelementen ausgebildeten Fahnen 4 fixiert. Ferner sind die Ansatzfahnen 2b und die freien Fahnenenden 2a erkennbar.

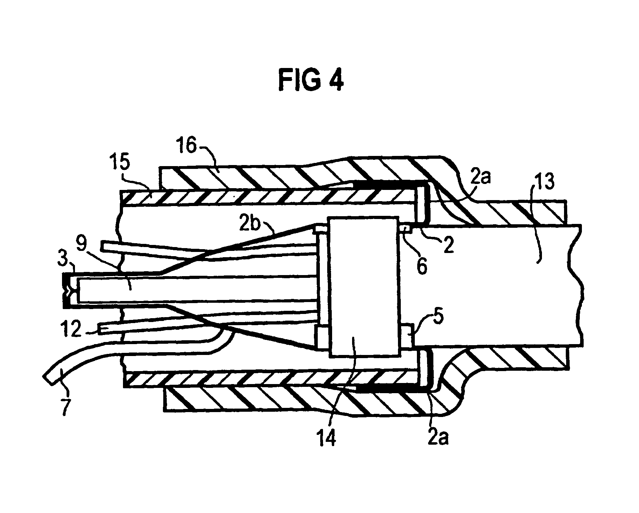

In Figur 4 ist im Schnittbild eine fertigmontierte Einheit dargestellt. Daraus läßt sich das Verfahren erkennen, wie die Montagefolge abläuft. Zunächst wird das Kabelende entsprechend abgesetzt und das Zentralelement 9 in die Hülse 3 des Abschlußelementes 1 eingeführt, wo es durch die als Halteelemente ausgebildeten Fahnen 4, die hier nicht gezeichnet sind, fixiert wird. Die Ansatzenden 2b der an die Hülse 3 angesetzten Fahnen 2 sind so aufgebogen, daß die Auflagebereiche 5 und 6 auf dem Kabel 13 angelegt werden können. Über diese Auflagebereiche 5 und 6 ist ein Klemmelement 14, zum Beispiel ein Spannband oder eine Rollfeder, aufgezogen, durch das der nötige Auflagedruck hergestellt wird. Anschließend wird diese montierte Einheit in die Kabeleinführung 15 eingeführt und durch Umbiegen der freien Enden 2a der Fahnen 2 nach auswärts in der Kabeleinführung zentriert. Schließlich wird über diesen Bereich ein Schrumpfschlauch 16 dichtend aufgeschrumpft. In der Figur sind außerdem Lichtwellenleiter 12 und der Anschluß für eine Erdkontaktierung 7 dargestellt.

## Patentansprüche

1. Abschlusselement für ein Zentralelement (9) eines optischen Kabels (13), mit einer Hülse (3) zur Aufnahme eines Endes des Zentralelements (9),
**dadurch gekennzeichnet, dass**
die Hülse (3) als einseitig geschlossene Hülse ausgebildet ist,
an einem offenen Ende der Hülse (3) mehrere flexible Fahnen (2) mit jeweils einem Ansatzende (2b) angesetzt sind,
die Fahnen (2) der Form eines Kabelmantels (11) anpassbare Auflagebereiche (5, 6) aufweisen, wobei ein Auflagebereich (5) einer Fahne (2) zu einer U-förmigen Aufnahme (8) für einen längs aus dem Kabelmantel (11) ausgeschnittenen Kabelmantellappen (10) ausgebogen ist,
in der Hülse (3) mehrere federnde Fahnen (4) zur Fixierung und Kontaktierung des Zentralelements (9) angeordnet sind, und
ein Klemmelement (14) die Auflagebereiche (5, 6) der Fahnen (2) auf den Kabelmantel (11) aufklemmt.
(Hieran schließen sich die Ansprüche 2 bis 10 in der ursprünglich eingereichten Fassung an.)

2. Abschlußelement nach Anspruch 1,
**dadurch gekennzeichnet,**
**daß** die Fahnen (2) im Ansatzbereich (2b) konisch auseinanderlaufend an der Hülse (3) angeordnet sind.

3. Abschlußelement nach einem der vorhergehenden Ansprüche,
**dadurch gekennzeichnet,**
**daß** die freien Enden (2a) der Fahnen (2) zur Fixierung und Zentrierung auf der Außenseite der Kabeleinführung (15) zurückbiegbar sind.

4. Abschlußelement nach einem der vorhergehenden Ansprüche,
**dadurch gekennzeichnet,**
**daß** das Klemmelement (14) ein Spannband ist.

5. Abschlußelement nach einem der Ansprüche 1 bis 3,
**dadurch gekennzeichnet,**
**daß** das Klemmelement (14) eine Rollfeder ist.

6. Abschlußelement nach einem der vorhergehenden Ansprüche,
**dadurch gekennzeichnet,**
**daß** ein elektrischer Anschluß (7) am Abschlußelement (1), vorzugsweise an einer der Fahnen (2), angeordnet ist.

7. Abschlußelement nach einem der vorhergehenden Ansprüche,
**dadurch gekennzeichnet,**
**daß** die als Halteelemente ausgebildeten Fahnen (4) durch einwärts gerichtete und aus der Hülse ausgestanzte Ausschnitte gebildet sind, die auf das eingeführte Zentralelement (9) aufgespreizt sind.

8. Abschlußelement nach einem der vorhergehenden Ansprüche,
**dadurch gekennzeichnet,**
**daß** ein Schrumpfschlauchstück (16) über der Kabeleinführung (15) und dem eingeführten Kabel (13) aufgeschrumpft ist.

9. Abschlußelement nach einem der vorhergehenden Ansprüche,
**dadurch gekennzeichnet,**
**daß** die Auflagebereiche (5, 6) nach einwärts gerichtete Kontaktdurchrisse (17) aufweisen.

10. Abschlußelement nach einem der vorhergehenden Ansprüche,
**dadurch gekennzeichnet,**
**daß** ein Anschluß (7) für Erdkontaktierung angeordnet ist.

11. Verfahren zur Erstellung einer dichten Kabeleinführung mit einem Abschlusselement (1) für die Fixierung eines Zentralelements (9) eines optischen Kabels (13), wobei das Anschlusselement (1) nach einem oder mehreren der Ansprüche 1 bis 10 ausgebildet ist,
**dadurch gekennzeichnet, dass**
der Kabelmantel (11) des einzuführenden Kabels (13) zur Bildung eines Kabelmantellappens (10) vom Ende her längsverlaufend eingeschnitten wird,
der Kabelmantellappen (10) in die U-förmige Aufnahme (8) des Abschlusselements (1) eingeführt wird,
das Ende des Zentralelements (9) in die Hülse (3) eingeführt und dabei von den in der Hülse angeordneten federnden Haltelementen (4) fixiert und kontaktiert wird,
dass die Fahnen (2) in ihren Auflagebereichen (5, 6) an den Kabelmantel (11) angeformt und mit Hilfe eines Klemmelements (14) kontaktierend fixiert werden,
dass eine Zentrierung des Kabels (13) mit Hilfe der freien Enden (2a) der Fahnen (2) innerhalb der Kabeleinführung (15) erfolgt, und
ein Schrumpfschlauchstück (16) auf die Kabeleinführung (15) und das Kabel (13) dichtend aufgeschrumpft wird.

## Claims

1. Termination element for a central element (9) of an optical cable (13), having a sleeve (3) for holding one end of the central element (9),
**characterized in that**
the sleeve (3) is in the form of an integrally closed sleeve,
a plurality of flexible tabs (2), each having an attachment end (2b), are fitted to an open end of the sleeve (3),
the tabs (2) have contact areas (5, 6) which can be matched to the shape of a cable sheath (11), with one contact area (5) of a tab (2) being bent out to form a U-shaped holder (8) for a cable sheath lug (10) which is cut out longitudinally from the cable sheath (11),
a plurality of sprung tabs (4) are arranged in the sleeve (3) in order to fix and make contact with the central element (9), and
a clamping element (14) clamps the contact areas (5, 6) of the tabs (2) onto the cable sheath (11).

2. Termination element according to Claim 1,
**characterized**
**in that** the tabs (2) are arranged such that they run conically away from one another on the sleeve (3) in the attachment area (2b).

3. Termination element according to one of the preceding claims,
**characterized**
**in that** the free ends (2a) of the tabs (2) can be bent back for fixing and centring on the outside of the cable entry (15).

4. Termination element according to one of the preceding claims,
**characterized**
**in that** the clamping element (14) is a clamping strip.

5. Termination element according to one of Claims 1 to 3,
**characterized**
**in that** the clamping element (14) is a scroll spring.

6. Termination element according to one of the preceding claims,
**characterized**
**in that** an electrical connection (7) is arranged on the termination element (1), preferably on one of the tabs (2).

7. Termination element according to one of the preceding claims,
**characterized**
**in that** the tabs (4) which are in the form of holding elements, are formed by cutouts which point inwards, are stamped out of the sleeve and are spread apart onto the inserted central element (9).

8. Termination element according to one of the preceding claims,
**characterized**
**in that** a piece of shrink sleeving (16) is shrunk on over the cable entry (15) and the inserted cable (13).

9. Termination element according to one of the preceding claims,
**characterized**
**in that** the contact areas (5, 6) have contact breaks (17) pointing inwards.

10. Termination element according to one of the preceding claims,
**characterized**
**in that** one connection (7) is arranged for making contact with earth.

11. Method for production of a sealed cable entry with a termination element (1) for the fixing of a central element (9) of an optical cable (13), with the connecting element (1) being designed according to one or more of Claims 1 to 10,
**characterized in that**
the cable sheath (11) of the cable (13) to be inserted is cut into running longitudinally from the end in order to form a cable sheath lug (10),
the cable sheath lug (10) is inserted into the U-shaped holder (8) in the termination element (1),
the end of the central element (9) is inserted into the sleeve (3), and in the process is fixed by and makes contact with the sprung holding elements (4) which are arranged in the sleeve,
**in that** the tabs (2) are integrally formed on the cable sheath (11) in their contact areas (5, 6), and are fixed with the aid of a clamping element (14) such that they make contact,
**in that** the cable (13) is centred with the aid of the free ends (2a) of the tabs (2) within the cable entry (15), and
a piece of shrink sleeving (16) is shrunk onto the cable entry (15) and the cable (13), forming a seal.

## Revendications

1. Terminaison pour un élément central (9) d'un câble optique (13), comprenant une gaine (3) pour recevoir une extrémité de l'élément central (9),
**caractérisée en ce que**
la gaine (3) est réalisée sous forme de gaine fermée d'un côté,
à une extrémité ouverte de la gaine (3) sont rapportées plusieurs lamelles flexibles (2) ayant une extrémité respective de bout (2b),
les lamelles (2) présentent des zones d'appui (5, 6) pouvant être adaptées à la forme d'une enveloppe de câble (11), une zone d'appui (5) d'une lamelle (2) étant recourbée pour former un logement en forme de U (8) pour un lobe d'enveloppe de câble (10) découpé le long de l'enveloppe de câble (11),
dans la gaine (3) sont disposées plusieurs lamelles élastiques (4) pour la fixation et le contact de l'élément central (9), et
un élément de serrage (14) serre les zones d'appui (5, 6) des lamelles (2) sur l'enveloppe de câble (11).

2. Terminaison selon la revendication 1,
**caractérisée en ce que**
les lamelles (2) sont disposées dans la région de bout (2b) sur la gaine (3) en s'écartant coniquement les unes des autres.

3. Terminaison selon l'une quelconque des revendications précédentes,
**caractérisée en ce que**
les extrémités libres (2a) des lamelles (2) peuvent être repliées pour la fixation et le centrage du côté extérieur de l'entrée de câble (15).

4. Terminaison selon l'une quelconque des revendications précédentes,
**caractérisée en ce que**
l'élément de serrage (14) est une bande de serrage.

5. Terminaison selon l'une quelconque des revendications 1 à 3,
**caractérisée en ce que**
l'élément de serrage (14) est un ressort à rouleau.

6. Terminaison selon l'une quelconque des revendications précédentes,
**caractérisée en ce que**
l'on dispose un raccordement électrique (7) sur la terminaison (1), de préférence sur l'une des lamelles (2).

7. Terminaison selon l'une quelconque des revendications précédentes,
**caractérisée en ce que**
les lamelles (4) réalisées sous forme d'élément de retenue sont formées par des découpures estampées dans la gaine, orientées vers l'intérieur, qui sont écartées sur l'élément central introduit (9).

8. Terminaison selon l'une quelconque des revendications précédentes,
**caractérisée en ce que**
une pièce de tuyau thermorétractable (16) est emmanchée à chaud par-dessus l'entrée de câble (15) et le câble introduit (13).

9. Terminaison selon l'une quelconque des revendications précédentes,
**caractérisée en ce que**
les zones d'appui (5, 6) présentent des contacts arrachés (17) orientés vers l'intérieur.

10. Terminaison selon l'une quelconque des revendications précédentes,
**caractérisée en ce que**
l'on prévoit un raccordement (7) pour une mise à la terre.

11. Procédé de création d'une entrée de câble étanche avec une terminaison (1) pour la fixation d'un élément central (9) d'un câble optique (13), la terminaison (1) étant réalisée selon l'une ou plusieurs des revendications 1 à 10,
**caractérisé en ce que**
l'enveloppe de câble (11) du câble à introduire (13) est entaillée le long de sa longueur depuis son extrémité pour former un lobe d'enveloppe de câble (10),
le lobe d'enveloppe de câble (10) est introduit dans le logement en forme de U (8) de la terminaison (1),
l'extrémité de l'élément central (9) est introduite dans la gaine (3) et est fixée et mise en contact par les éléments de retenue (4) élastiques disposés dans la gaine,
les lamelles (2) sont formées dans leurs zones d'appui (5, 6) sur l'enveloppe de câble (11) et sont fixées avec contact à l'aide d'un élément de serrage (14),
un centrage du câble (13) s'effectue à l'aide des extrémités libres (2a) des lamelles (2) à l'intérieur de l'entrée de câble (15), et
une pièce de tuyau thermorétractable (16) est emmanchée à chaud de manière hermétique sur l'entrée de câble (15) et le câble (13).
